# EUROPEAN PATENT APPLICATION

(11) **EP 4 152 568 A1**
(43) Date of publication of application: **22.03.2023**
(21) Application number: 21805303.1
(22) Date of filing: 05.04.2021
(51) Int. Cl.: H02K 1/27

(54) **ROTOR AND ELECTRIC MOTOR**

(30) Priority: 15.05.2020 JP 2020085763
(71) Applicant: Panasonic Intellectual Property Management Co., Ltd., Osaka-shi, Osaka 540-6207 (JP)
(72) Inventor: YAMAGUCHI, Akira, Osaka-shi, Osaka 540-6207 (JP); KAWAMURA, Kiyomi, Osaka-shi, Osaka 540-6207 (JP); MAEDA, Yuya, Osaka-shi, Osaka 540-6207 (JP)
(74) Representative: SSM Sandmair
(86) International application number: PCT/JP2021/014456
(87) International publication number: WO 2021/229954

(57) **Abstract**

Provided is a rotor including a magnet disposed in a magnet insertion hole of an iron core, the iron core having an outermost peripheral shape including a first arc and a second arc that are continuous via an inflection point, the first arc passing through a first point at which a first straight line passing through a center of a magnetic pole of a magnet and an axis intersects an outermost periphery of the iron core, the second arc connecting a second point at which a second straight line passing through a center between magnetic poles of two respective adjacent magnets of a plurality of magnets and the axis, the second straight line intersecting the outermost periphery of the iron core, to the inflection point, wherein a relationship of 0.860 ≤ r2/r1 ≤ 0.925 is satisfied where a distance between the first point and the shaft center is indicated as r1 and a distance between the second point and the shaft center is indicated as r2, and a relationship of 0.56 ≤ R2/R1 ≤ 0.71 is satisfied where a radius of the first arc is indicated as R1 and a radius of the second arc is indicated as R2.

## Description

### TECHNICAL FIELD

The present disclosure relates to a rotor and an electric motor including the rotor. The present disclosure particularly relates to a permanent magnet-embedded rotor in which a permanent magnet is disposed in an iron core, and an electric motor including the rotor.

### BACKGROUND ART

Electric motors are used in various electric apparatuses such as household apparatuses and industrial apparatuses. For example, an electric motor is used in an electric blower mounted on a vacuum cleaner to rotate a rotary fan.

As an electric motor, an interior permanent magnet (IPM) motor is known in which a rotor includes multiple permanent magnets embedded in an iron core. The IPM motor can acquire not only magnet torque generated by the permanent magnets of the iron core of the rotor, but also reluctance torque due to uneven magnitude of magnetic resistance generated in the iron core. This enables fabricating a motor having a small size and high efficiency.

Unfortunately, the IPM motor has magnetic attraction force that varies depending on a rotational position of the rotor due to magnetic flux generated by the permanent magnets embedded in the iron core of the rotor, thereby causing pulsation of torque called cogging torque when the rotor rotates.

To reduce such cogging torque, a technique of devising an outermost peripheral shape of the iron core of the rotor is known in the IPM motor. For example, PTL 1 discloses an electric motor in which each magnetic pole of an iron core of a rotor has an outermost peripheral shape that is formed by an arc and two straight lines to reduce cogging torque and reduce a relative harmonic content of induced voltage, thereby suppressing vibration and noise.

Unfortunately, a conventional electric motor has structure in which cogging torque is less likely to be reduced without reducing efficiency. For example, the cogging torque can be reduced by increasing an air gap between a stator and a rotor. However, increase of the air gap between the stator and the rotor reduces efficiency of the electric motor. The increase of the air gap between the stator and the rotor also increases the electric motor in size.

In recent years, not only downsizing of an electric motor, but also increase in speed of the electric motor, has been desired. Unfortunately, when rotation speed of the rotor is increased to simply increase speed of the electric motor, influence of cogging torque on vibration increases. In this case, even when the electric motor alone seems to be able to reduce cogging torque in the structure of the conventional electric motor, vibration may be generated due to influence of the cogging torque when the electric motor is incorporated in an electric blower, and thus noise may be generated.

As described above, the conventional electric motor is less likely to sufficiently reduce the cogging torque without reducing the efficiency. For particularly decrease in size and increase in speed of the electric motor, the structure of the conventional electric motor has a limit of reducing the cogging torque while maintaining the efficiency.

### Citations List

### Patent Literature

PTL 1: Unexamined Japanese Patent Publication No. 2006-238667

### SUMMARY OF THE INVENTION

The present disclosure has been made to solve the above problems. An object of the present disclosure is to provide a rotor and an electric motor that are capable of effectively reducing cogging torque without reducing efficiency of the electric motor.

To achieve the above object, a rotor according to an aspect of the present disclosure includes: an iron core having multiple magnet insertion holes; multiple magnets that are disposed in the respective multiple magnet insertion holes; and a rotating shaft fixed to the iron core. The rotating shaft has an axis intersecting a plane on which the iron core has an outermost peripheral shape of corresponding to a magnetic pole of each of the multiple magnets, the outermost peripheral shape including a first arc and a second arc that are continuous via an inflection point. The first arc passes through a first point at which a first straight line passing through a center of the magnetic pole and the axis intersects an outermost periphery of the iron core. The second arc connects a second point at which a second straight line passing through a center between magnetic poles of two respective adjacent magnets of the multiple magnets and the axis, the second straight line intersecting the outermost periphery of the iron core, to the inflection point. Then, a relationship of 0.860 ≤ r2/r1 ≤ 0.925 is satisfied where a distance between the first point and the shaft center is indicated as r1 and a distance between the second point and the shaft center is indicated as r2, and also a relationship of 0.56 ≤ R2/R1 ≤ 0.71 is satisfied where a radius of the first arc is indicated as R1 and a radius of the second arc is indicated as R2.

An electric motor according to an aspect of the present disclosure includes the rotor and a stator that is disposed to face the rotor and that generates magnetic force acting on the rotor.

The present disclosure enables the cogging torque to be effectively reduced without reducing the efficiency of the electric motor.

### BRIEF DESCRIPTION OF THE DRAWINGS

Fig. 1 is a sectional view of a motor according to an exemplary embodiment.
Fig. 2 is a sectional view of the motor taken along line II-II in Fig. 1.
Fig. 3 is a sectional view of a rotor in an electric motor according to an exemplary embodiment.
Fig. 4 is a graph illustrating a relationship between r2/r1 and cogging torque in an electric motor including a rotor having the structure illustrated in Figs. 1 to 3.
Fig. 5 is a graph illustrating a relationship between R2/R1 and cogging torque in an electric motor having the structure illustrated in Figs. 1 to 3.
Fig. 6 is a graph illustrating pulsation data on rotational torque in a comparative example and an example.
Fig. 7 is a graph illustrating high-order component data in waveform data on rotational torque in a comparative example and an example.
Fig. 8 is a graph illustrating performance data on an electric motor in a comparative example and an example.

### DESCRIPTION OF EMBODIMENT

Hereinafter, an exemplary embodiment of the present disclosure will be described. The following exemplary embodiment illustrates a specific example of the present disclosure. Thus, numerical values, components, placement positions and connection forms of the components, steps, order of the steps, and the like, which are described in the following exemplary embodiment, are illustrative and are not to limit the scope of the present disclosure. The following exemplary embodiment includes components in which a component, which is not described in the independent claim showing the highest concept of the present disclosure, is described as an optional component.

Each of the drawings is a schematic view, and is not necessarily precisely illustrated. In each drawing, substantially the same components are denoted by the same reference numerals to eliminate or simplify duplicated description.

### (Exemplary embodiment)

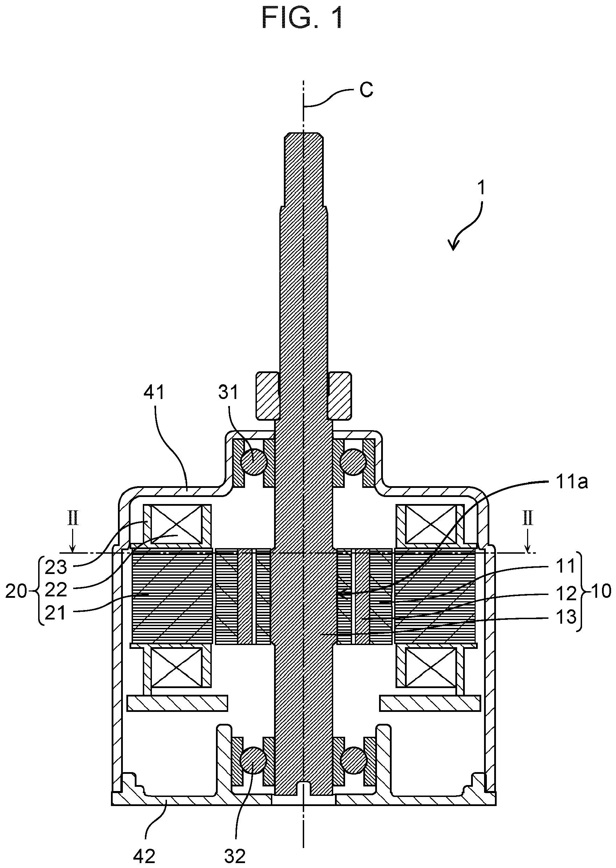

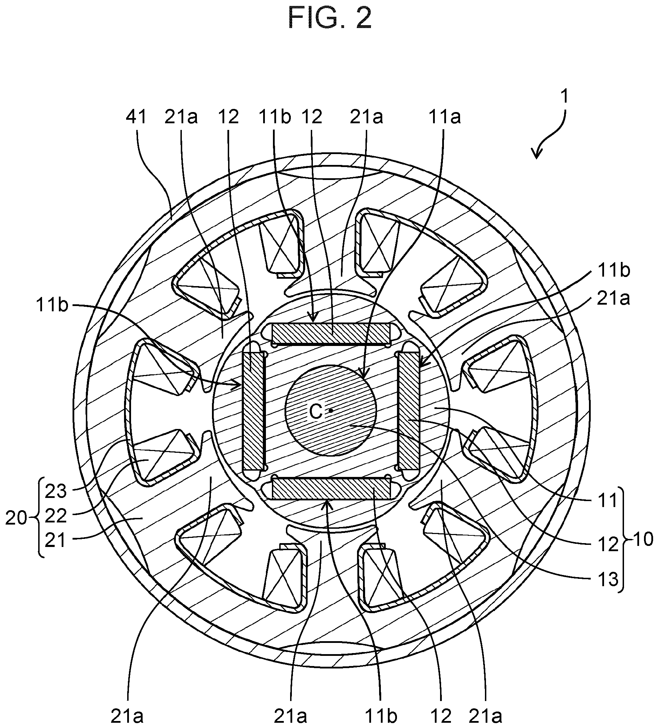

First, general structure of electric motor 1 according to an exemplary embodiment will be described with reference to Figs. 1 and 2. Fig. 1 is a sectional view of electric motor 1 that is a motor according to an exemplary embodiment. Fig. 2 is a sectional view of electric motor 1 that is a motor, taken along line II-II in Fig. 1. Electric motor 1 according to the present exemplary embodiment can be used as, for example, a fan motor of an electric blower mounted in a vacuum cleaner.

As illustrated in Figs. 1 and 2, electric motor 1 includes rotor 10, stator 20, first bearing 31, second bearing 32, first bracket 41, and second bracket 42.

Electric motor 1 is an inner rotor motor in which rotor 10 is disposed inside stator 20. That is, stator 20 is disposed surrounding rotor 10.

Rotor 10 (rotor) is disposed with an air gap from stator 20. Specifically, a minute air gap exists between a surface of rotor 10 and a surface of stator 20. Rotor 10 rotates using magnetic force generated in stator 20.

Rotor 10 includes multiple N poles and S poles that generate magnetic flux in a circumferential direction and are alternately and repeatedly provided. As a result, rotor 10 generates a magnetic force acting on stator 20. Rotor 10 generates magnetic flux in a direction orthogonal to a direction (axial direction) in which axis C of rotating shaft 13 extends. That is, rotor 10 generates the magnetic flux in a radial direction.

Rotor 10 includes iron core 11, magnet 12, and rotating shaft 13. Rotor 10 is a permanent magnet embedded rotor (IPM rotor) in which magnet 12 being a permanent magnet is embedded in iron core 11. Thus, electric motor 1 in the present embodiment is an IPM motor.

Iron core 11 is a rotor iron core (rotor core) serving as a core of rotor 10. Iron core 11 is a stacked body in which multiple steel sheets are stacked in the direction (axial direction) in which axis C of rotating shaft 13 extends. Each of the multiple steel sheets is a punched electromagnetic steel sheet formed into a predetermined shape, for example. The multiple steel sheets are fixed to each other by crimping, for example. Iron core 11 is not limited to a stacked body of multiple steel sheets, and may be a bulk body made of a magnetic material.

Magnet 12 is a permanent magnet composed of a sintered magnet. Magnet 12 is embedded in iron core 11. That is, electric motor 1 is an IPM motor including an IPM rotor being rotor 10 in which magnet 12 is embedded in iron core 11. Multiple magnets 12 are embedded in iron core 11. In the present exemplary embodiment, four magnets 12 are embedded in iron core 11.

Rotating shaft 13 is an elongated shaft, and is a metal rod, for example. Rotating shaft 13 is fixed to iron core 11. Specifically, rotating shaft 13 is inserted into through-hole 11a provided at the center of iron core 11 and fixed to iron core 11 while extending on opposite sides of iron core 11 in the direction of axis C. Rotating shaft 13 is fixed to iron core 11 by press-fitting or shrink-fitting into through-hole 11a of iron core 11, for example.

Rotor 10 configured as described above rotates about axis C of rotating shaft 13. That is, rotating shaft 13 serves as the center of rotation of rotor 10. Details of rotor 10 will be described later.

Stator 20 is disposed facing rotor 10 with an air gap between stator 20 and rotor 10. Specifically, stator 20 is disposed surrounding iron core 11 of rotor 10.

Stator 20 generates magnetic force acting on rotor 10. Specifically, stator 20 includes multiple N poles and S poles that are alternately and repeatedly provided to generate magnetic flux on surfaces of stator 20 and iron core 11 of rotor 10, the surfaces being located across the air gap therebetween. Stator 20 constitutes a magnetic circuit together with rotor 10.

Stator 20 includes iron core 21, winding coil 22, and insulator 23 in the present exemplary embodiment.

Iron core 21 is a stator core being a core of stator 20. Iron core 21 is a stacked body in which multiple steel sheets are stacked along the direction of axis C of rotating shaft 13 in the present exemplary embodiment. Each of the multiple steel sheets is a punched electromagnetic steel sheet formed into a predetermined shape, for example. Iron core 21 is not limited to the stacked body of multiple steel sheets, and may be a bulk body made of a magnetic material.

As illustrated in Fig. 2, iron core 21 is provided with multiple teeth 21a protruding toward iron core 11 of rotor 10. Specifically, multiple teeth 21a are provided protruding toward axis C of rotating shaft 13. That is, multiple teeth 21a radially extend in a direction (radial direction) orthogonal to axis C of rotating shaft 13. Multiple teeth 21a are disposed at equal intervals in the circumferential direction while forming a slot between two adjacent teeth 21a. Iron core 21 has six teeth 21a in the present exemplary embodiment. That is, the number of slots of stator 20 is six.

Each of teeth 21a is provided with an extension extending from a leading end on an inner peripheral side of the tooth 21a to opposite sides in the circumferential direction. The extension is formed protruding from the leading end on the inner peripheral side of each of teeth 21a. Two adjacent teeth 21a include one tooth 21a and another tooth 21a that include respective extensions between which a gap (slot opening) is provided.

Winding coil 22 is a stator coil that is an armature winding of stator 20. Winding coil 22 is wound around each of teeth 21a with insulator 23 interposed therebetween. Winding coil 22 is a concentrated winding coil wound around each of teeth 21a, and is housed in a slot of iron core 21 in the present exemplary embodiment.

Winding coil 22 is a three-phase winding to enable rotor 10 to rotate as a three-phase synchronous motor. Specifically, winding coil 22 is composed of unit coils of three phases of U-phase, V-phase, and W-phase that are electrically different from each other by 120 degrees. That is, winding coil 22 wound around each of teeth 21a is energized and driven by three-phase alternating current energized in units of phases of the U-phase, the V-phase, and the W-phase. As a result, main magnetic flux of stator 20 is generated in each of teeth 21a. That is, each of teeth 21a is a magnetic pole tooth, and is an electromagnet that generates magnetic force by energizing winding coil 22.

Insulator 23 is a coil bobbin and has a frame body in a frame-like shape around which winding coil 22 is wound. Specifically, the frame body of insulator 23 is formed surrounding a body of each of teeth 21a. Insulator 23 is provided on each of multiple teeth 21a. Insulator 23 is a resin molding integrally molded with an insulating resin material, for example.

As illustrated in Fig. 1, first bearing 31 and second bearing 32 rotatably hold rotating shaft 13. First bearing 31 supports a part protruding from one side of iron core 11 of rotor 10. In contrast, second bearing 32 supports a part protruding from the other side of iron core 11 of rotor 10. Although ball bearings are used as first bearing 31 and second bearing 32, other bearings such as thrust bearings may be used.

First bracket 41 holds first bearing 31. Specifically, first bearing 31 is fixed to a recess provided in first bracket 41. Second bracket 42 holds second bearing 32. Specifically, second bearing 32 is fixed to a recess provided in second bracket 42. First bracket 41 and second bracket 42 are each made of a metallic material, for example. First bracket 41 and second bracket 42 may be each made of a resin material.

First bracket 41 and second bracket 42 constitute an outline of electric motor 1 in the present exemplary embodiment. Specifically, first bracket 41 is a frame (housing) with an opening, and second bracket 42 is a lid that closes the opening of first bracket 41.

Rotating shaft 13 passes through first bracket 41, and a part of rotating shaft 13 protrudes outward from first bracket 41. Although not illustrated, a load such as a rotary fan is attached to a part of rotating shaft 13, the part protruding outward from first bracket 41. That is, rotating shaft 13 has the part protruding from first bracket 41, the part serving as an output shaft.

Electric motor 1 configured as illustrated in Figs. 1 and 2 is configured such that when winding coil 22 of stator 20 is energized, a field current flows through winding coil 22 to generate a magnetic field. As a result, magnetic flux oriented from stator 20 to rotor 10 is generated. Specifically, magnetic flux is generated from each of teeth 21a of iron core 21 of stator 20 toward iron core 11 of rotor 10. Then, rotor 10 generates magnetic flux passing through stator 20 using magnet 12 embedded in iron core 11. Interaction between the magnetic flux generated by stator 20 and the magnetic flux generated by magnet 12 of rotor 10 generates magnetic force to generate torque for rotating rotor 10, thereby rotating rotor 10.

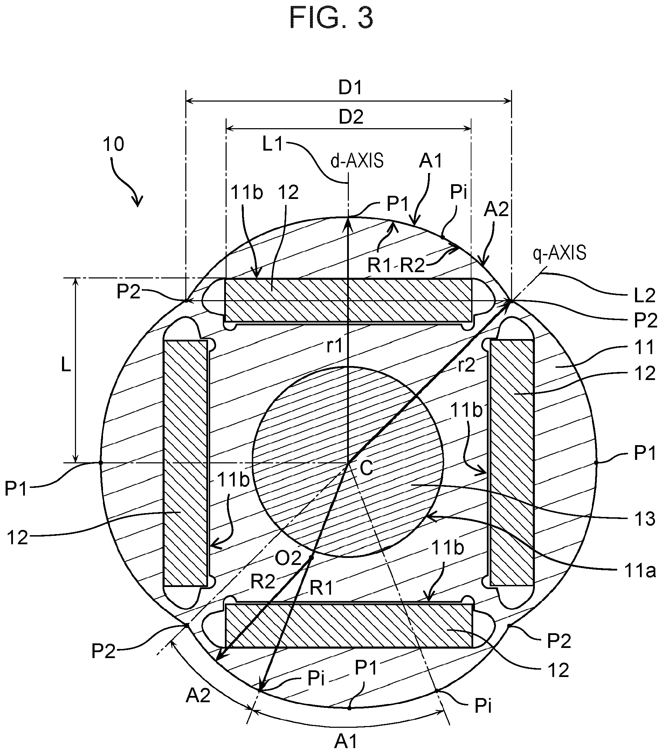

Next, detailed structure of rotor 10 in electric motor 1 according to the present exemplary embodiment will be described with reference to Fig. 3. Fig. 3 is a sectional view of rotor 10 in electric motor 1 according to the exemplary embodiment. Fig. 3 is an enlarged sectional view of rotor 10 in Fig. 2.

As described above, rotor 10 includes iron core 11, magnet 12 embedded in iron core 11, and rotating shaft 13 inserted into through-hole 1 1a of iron core 11.

As illustrated in Fig. 3, iron core 11 includes multiple magnet insertion holes 11b. Multiple magnet insertion holes 11b serve as magnet embedded holes in which respective magnets 12 are embedded. Multiple magnet insertion holes 11b are provided at equal intervals along a rotation direction of iron core 11. Four magnet insertion holes 11b are provided in the present exemplary embodiment. Four magnet insertion holes 11b are provided in a vertically and horizontally symmetric manner in top view.

Each of magnet insertion holes 11b is a through-hole passing through iron core 11 along a longitudinal direction (direction of axis C) of rotating shaft 13. Thus, each of magnet insertion holes 11b is open in opposite end surfaces of iron core 11 in the longitudinal direction (direction of axis C) of rotating shaft 13. Each of magnet insertion holes 11b has an opening in a slit-like substantially rectangular shape in top view. Each of magnet insertion holes 11b has a section take along an arbitrary plane with a normal line in the longitudinal direction of rotating shaft 13, the section having a slit-like substantially rectangular shape being identical to the opening. Each of magnet insertion holes 11b may not pass through iron core 11. For example, the multiple steel sheets constituting iron core 11 may include the steel sheet provided with no opening at one end of iron core 11. In this case, the steel sheet with no opening as the magnet insertion hole 11b serves as a stopper when magnet 12 is inserted into iron core 11.

Magnet 12 is disposed in each of multiple magnet insertion holes 11b. Specifically, one magnet 12 is inserted into each of magnet insertion holes 11b. Multiple magnets 12 are disposed at equal intervals along the circumferential direction of iron core 11 as with multiple magnet insertion holes 11b. Magnet 12 is a magnetized permanent magnet. Multiple magnets 12 are disposed such that an S-pole and an N-pole, which are each a magnetic pole, are alternately present in the circumferential direction of rotor 10. That is, two adjacent magnets 12 are opposite in direction of magnetic poles of the S-pole and the N-pole.

Iron core 11 is provided with four magnet insertion holes 11b, so that four magnets 12 are inserted into iron core 11. Thus, the number of poles of rotor 10 is four (the number of pole pairs is two). Magnet 12 may be magnetized after magnet 12 is disposed in magnet insertion hole 11b, or may be magnetized in advance before magnet 12 is inserted into magnet insertion hole 11b. Considering workability of inserting magnet 12 into magnet insertion hole 11b, magnet 12 is preferably magnetized after being inserted into magnet insertion hole 11b.

Magnet 12 is a rectangular parallelepiped in a plate shape, and has a rectangular shape in plan view. Thus, magnet 12 has a section taken along a plane with a normal line in the longitudinal direction of rotating shaft 13, the section having a rectangular shape. Magnet 12 is disposed in magnet insertion hole 11b to have a thickness direction in the radial direction of iron core 11.

Magnet 12 is disposed in magnet insertion hole 11b to be close to the radially outside (outer periphery) of iron core 11. Specifically, magnet 12 disposed in magnet insertion hole 11b has a gap (clearance) between a radially inner surface of each magnet insertion hole 11b and magnet 12. Each magnet insertion hole 11b has an inner surface located radially outside, the inner surface being in contact with magnet 12. Magnet 12 inserted into magnet insertion hole 11b may be fixed to iron core 11 with an adhesive, or magnet 12 may be fixed to iron core 11 by separately providing a fixing member having a projection that is filled in the gap between the magnet 12 and the magnet insertion hole 11b.

Next, details of an outermost peripheral shape (outer edge shape) of iron core 11 of rotor 10 will be described. As illustrated in Fig. 3, iron core 11 in the present exemplary embodiment has an outermost peripheral part provided with a recess formed such that a part between two adjacent magnets 12 is recessed inward (i.e., in a direction toward axis C). As a result, iron core 11 has a petal-like shape in which the outermost peripheral part bulges outward at positions corresponding to respective multiple magnets 12 when viewed from the direction of axis C of rotating shaft 13. Four magnets 12 are provided in iron core 11 in the present exemplary embodiment, so that four recesses are formed in the outermost peripheral part of iron core 11. The outermost peripheral part of iron core 11 is formed having a part corresponding to a magnetic pole center of each of four magnets 12, the part bulging outward.

As specifically illustrated in Fig. 3, iron core 11 has an outermost peripheral shape corresponding to a magnetic pole of magnet 12 on a plane intersecting axis C of rotating shaft 13, the outermost peripheral shape including first arc A1 and second arc A2 continuous via inflection point Pi. Inflection point Pi is a connection point between first arc A1 and second arc A2. First arc A1 and second arc A2 constitute one curve continuous via inflection point Pi.

First arc A1 passes through first point P1 at which first straight line L1 (i.e., d-axis) passing through the magnetic pole center of magnet 12 and the axis C of the rotating shaft 13 intersects the outermost periphery of iron core 11. Specifically, first arc A1 passes through first point P1 and connects two adjacent inflection points Pi.

Second arc A2 connects inflection point Pi and second P2 at which second straight line L2 (i.e., q-axis) passing through a magnetic pole center between two adjacent magnets 12 of multiple magnets 12 and axis C of rotating shaft 13 intersects the outermost periphery of iron core 11.

First arc A1 and second arc A2 are different in radius from each other. Thus, iron core 11 has an outermost peripheral shape corresponding to one magnetic pole of each magnet 12, the outermost peripheral shape including two types of arc of first arc A1 and second arc A2 different in radius. Specifically, the outermost peripheral shape of iron core 11 corresponding to one magnetic pole is a curve connecting two adjacent second points P2, and one first arc A1 and two second arcs A2 constitute the curve.

First arc A1 is centered on axis C of rotating shaft 13. That is, when first arc A1 has a radius indicated as R1, first arc A1 is an arc with radius R1 about axis C as a rotation center. Thus, first arc A1 is a part of a circle forming a maximum diameter of iron core 11.

In contrast, second arc A2 has a center that is located between axis C and the outermost periphery (outer edge) of iron core 11 instead of being axis C of rotating shaft 13. Second arc A2 is formed to form a recess by recessing a part of the circle having the maximum diameter of iron core 11 toward axis C. That is, providing second arc A2 enables a part of the outermost peripheral part of iron core 11 to be recessed.

Second arc A2 in the present exemplary embodiment has the center that is point O2 located on a line segment connecting inflection point Pi and axis C of rotating shaft 13. That is, when second arc A2 has a radius indicated as R2, second arc A2 is an arc with radius R2 about point O2 as a rotation center.

As illustrated in Fig. 3, magnet 12 has an elongated shape when viewed from the direction of axis C of rotating shaft 13. Specifically, magnet 12 is provided such that an edge of magnet 12 in a width direction is located beyond inflection point Pi in a longitudinal direction of magnet 12. That is, a distance between an end of magnet 12 in the width direction and first straight line L1 is longer than a distance between inflection point Pi and first straight line L1.

Rotor 10 has a first distance that is a distance between first point P1 and axis C of rotating shaft 13 and is indicated as r1, a second distance that is a distance between second point P2 and axis C of rotating shaft 13 and is indicated as r2, and a distance ratio r2/r1 that is a ratio of first distance r1 to second distance r2 and satisfies a relationship of 0.860 ≤ r2/r1 ≤ 0.925.

Rotor 10 according to the present exemplary embodiment further has a radius ratio R2/R1 that is a ratio of radius R1 of first arc A1 to radius R2 of second arc A2 and satisfies a relationship of 0.56 ≤ R2/R1 ≤ 0.71.

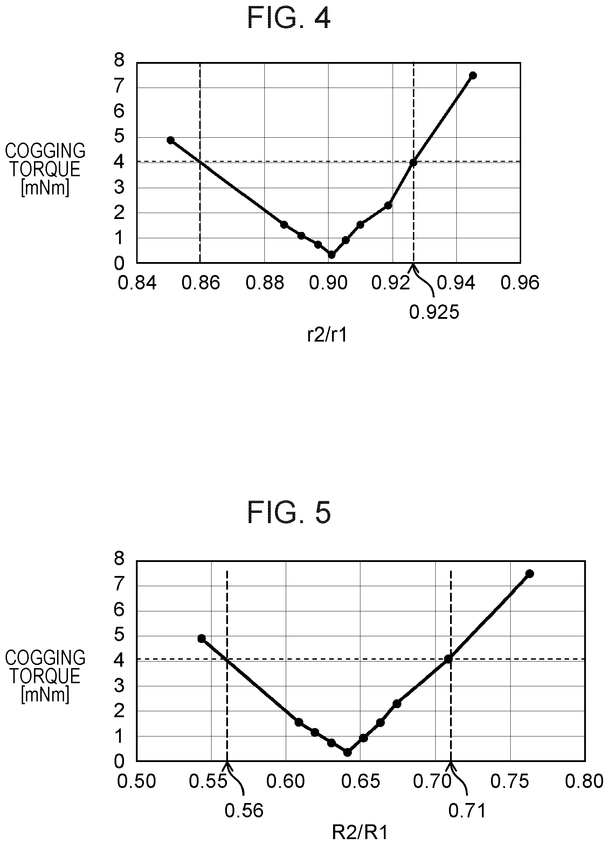

Here, an effect of satisfying the relationship of 0.860 ≤ r2/r1 ≤ 0.925 and the relationship of 0.56 ≤ R2/R1 ≤ 0.71 will be described with reference to Figs. 4 and 5.

Fig. 4 is a graph illustrating a relationship between r2/r1 and cogging torque in an electric motor including a rotor having the structure illustrated in Figs. 1 to 3. Fig. 5 is a graph illustrating a relationship between R2/R1 and cogging torque in an electric motor having the structure illustrated in Figs. 1 to 3.

As for distance ratio r2/r1 that is the ratio between first distance r1 on the d-axis and second distance r2 on the q-axis, the cogging torque can be reduced by reducing distance ratio r2/r1. However, as distance ratio r2/r1 decreases, second point P2 approaches axis C (i.e., toward the inside of iron core 11). Thus, the outermost periphery of iron core 11 is recessed greatly toward axis C at second point P2. As a result, magnetic flux is less likely to flow through iron core 11, so that efficiency of the electric motor decreases. Thus, an excessive decrease in distance ratio r2/r1 is not preferable.

The relationship between the cogging torque and distance ratio r2/r1 illustrated in Fig. 4 shows that the cogging torque is minimized when distance ratio r2/r1 has a value around 0.90. Across the minimum point, the cogging torque increases in value as distance ratio r2/r1 decreases in value. The cogging torque also increases in value as distance ratio r2/r1 increases in value across the minimum point.

Results of study of the inventors of the present invention reveals that setting distance ratio r2/r1 satisfying the relationship of 0.860 ≤ r2/r1 ≤ 0.925 enables the cogging torque to have a value of less than or equal to 4 [mNm] to effectively reduce the cogging torque without decreasing the efficiency of the electric motor.

First arc A1 and second arc A2 have radius ratio R2/R1 between radius R1 of first arc A1 and radius R2 of second arc A2, and a position of inflection point Pi, which is a connection point between first arc A1 and second arc A2, is determined in accordance with a value of radius ratio R2/R1. That is, the position of inflection point Pi between first point P1 and second point P2 on the outer periphery (outer edge) of iron core 11 is determined in accordance with the value of radius ratio R2/R1.

Specifically, when radius ratio R2/R1 has a value of less than 0.5, inflection point Pi is located close to second point P2 (i.e., close to the q-axis). As radius ratio R2/R1 decreases in value, inflection point Pi approaches second point P2. In contrast, when radius ratio R2/R1 has a value of more than 0.5, inflection point Pi is located close to first point P1 (i.e., close to the d-axis). Then, as radius ratio R2/R1 increases in value, inflection point Pi approaches first point P1.

From the viewpoint of efficiency of the electric motor, the structure above preferably has a ratio of each of first arc A1 and second arc A2 between first point P1 and second point P2, in which first arc A1, which is a part of the circle constituting the maximum diameter of iron core 11, has the ratio larger than the ratio of second arc A2. Thus, inflection point Pi is preferably located close to first point P1 (i.e., close to the d-axis) between first point P1 and second point P2. That is, radius ratio R2/R1 preferably has a value of more than or equal to 0.5.

The relationship between the cogging torque and radius ratio R2/R1 illustrated in Fig. 5 shows that the cogging torque is minimized when radius ratio R2/R1 has a value around 0.64. Across the minimum point, the cogging torque increases in value as radius ratio R2/R1 decreases in value, and the cogging torque increases in value as radius ratio R2/R1 increases in value.

The results of study of the inventors of the present invention reveals that setting radius ratio R2/R1 satisfying the relationship of 0.56 ≤ R2/R1 ≤ 0.71 enables the cogging torque to have a value of less than or equal to 4 [mNm] to effectively reduce the cogging torque without decreasing the efficiency of the electric motor.

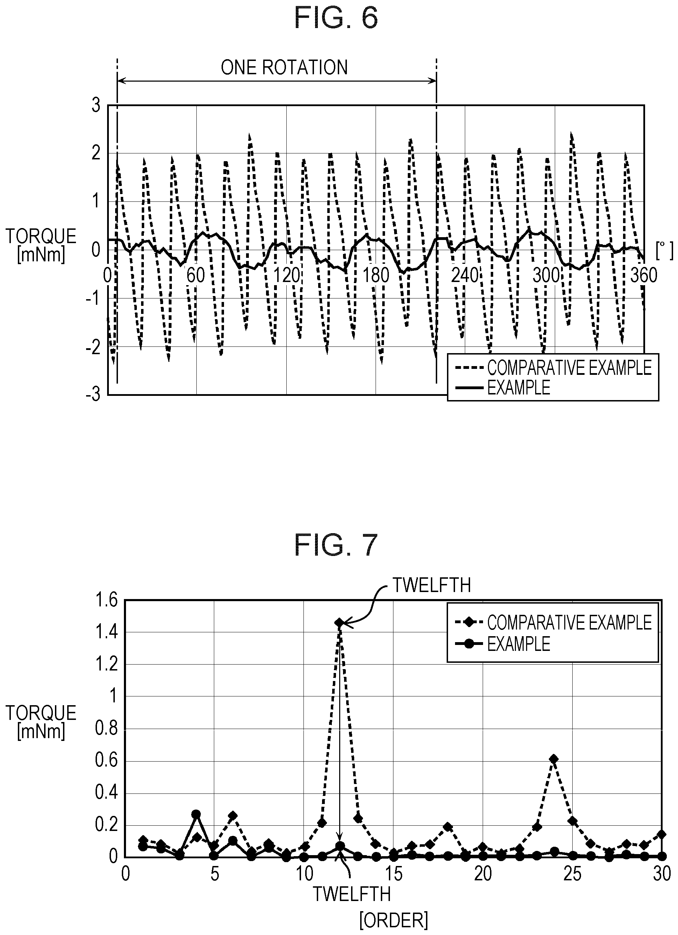

Verification experiments for comparing an electric motor including a rotor of a comparative example (referred below as a "comparative example") with electric motor 1 including the rotor according to the present exemplary embodiment (referred below as an "example") has been performed, and thus next results of the verification experiments will be described with reference to Figs. 6 to 8.

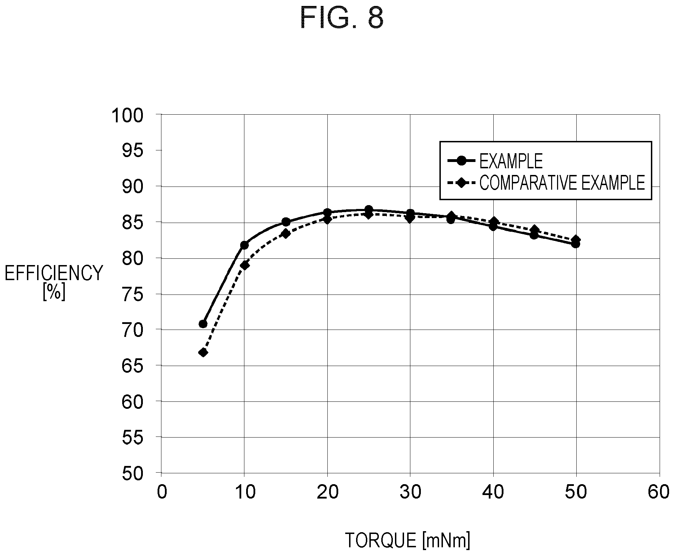

Fig. 6 is a graph illustrating pulsation data on rotational torque (cogging torque) in the comparative example and the example. Fig. 7 is a graph illustrating high-order component data in waveform data on rotational torque in the comparative example and the example. Fig. 8 is a graph illustrating performance data on the electric motor in the comparative example and the example.

Each of the comparative example and the example in the present experiments used an electric motor including a rotor having four poles and six slots, and the structure illustrated in Figs. 1 to 3. The comparative example in the present experiments had R1 of 9.20 mm, R2 of 7.00 mm, r1 of 9.20 mm, r2 of 8.59 mm, D1 of 12.14 mm, D2 of 9.10 mm, and L of 6.93 mm. The example in the present experiments had R1 of 9.20 mm, R2 of 5.80 mm, r1 of 9.20 mm, r2 of 8.25 mm, D1 of 11.67 mm, D2 of 9.10 mm, and L of 6.80 mm. Here, D1 is a distance between P2 and P2, D2 is a width of a magnet, and L is a distance between an outer end of the magnet and axis C. To compare the comparative example and the example, the motor was rotated under the following conditions. That is, when the cogging torque was measured, the rotor was rotated at 5 rpm in both the comparative example and the example. When performance other than the cogging torque was measured, the rotor was rotated at 6,150 rpm in both the comparative example and the example.

As a result, the example illustrated in Fig. 6 reveals that the cogging torque was significantly reduced as compared with the comparative example. Fig. 7 reveals that the example was able to reduce a pure torque ripple component (twelfth order) to less than or equal to 1/10 as compared with the comparative example. Fig. 8 reveals efficiency of the electric motor in which the example had efficiency slightly decreased to lower than efficiency of the comparative example in an overloaded part, and had peak efficiency increased to higher than that of the comparative example. The example was able to have overall efficiency of the electric motor that was almost identical to that of the comparative example, and thus had efficiency that was hardly reduced as compared with the comparative example. The experimental results described above reveal that the cogging torque in the example was able to be effectively reduced without reducing the efficiency of the electric motor as compared with the comparative example.

As described above, according to rotor 10 and electric motor 1 of the present exemplary embodiment, rotor 10 includes iron core 11 having multiple magnet insertion holes 11b, multiple magnets 12 that are disposed in respective magnet insertion holes 11b, and rotating shaft 13 fixed to iron core 11. Iron core 11 has the outermost peripheral shape corresponding to the magnetic pole of each of multiple magnets 12 on the plane intersecting axis C of rotating shaft 13, the outermost peripheral shape including first arc A1 and second arc A2 continuous via inflection point Pi. First arc A1 passes through a first point at which first straight line L1 passing through the magnetic pole center and the axis C intersects the outermost periphery of iron core 11. Second arc A2 connects inflection point Pi and a second point at which second straight line L2 passing through the magnetic pole center between two adjacent magnets 12 of multiple magnets 12 and axis C intersects the outermost periphery of iron core 11. First distance r1 between first point P1 and axis C of rotating shaft 13, and second distance r2 between second point P2 and axis C of rotating shaft 13, satisfy the relationship of 0.860 ≤ r2/r1 ≤ 0.925, and radius R1 of first arc A1 and radius R2 of second arc A2 satisfy the relationship of 0.56 ≤ R2/R1 ≤ 0.71.

This structure enables the cogging torque to be effectively reduced without reducing the efficiency of electric motor 1. That is, both high efficiency of electric motor 1 and reduction in cogging torque can be achieved.

Thus, an air gap between rotor 10 and stator 20 does not need to be increased to reduce the cogging torque, and thus, so that increase in size of electric motor 1 can be suppressed. That is, a small electric motor can be obtained. Additionally, even when rotor 10 is rotated at a high speed, vibration due to the cogging torque can be suppressed. Thus, even when an electric motor in which a rotor rotates at a high speed is incorporated in an electric blower, noise caused by vibration due to the cogging torque can be effectively suppressed. As described above, electric motor 1 of the present exemplary embodiment enables the cogging torque to be sufficiently reduced even when electric motor 1 reduced in size and increased in speed.

Rotor 10 preferably satisfies a relationship of 0.7 ≤ D2/D1 ≤ 0.8 on a plane intersecting axis C of rotating shaft 13 as illustrated in Fig. 3, where D1 is a length of a chord connecting two adjacent second points P2, and D2 is a width of magnet 12. This structure enables the cogging torque to be further reduced.

Rotor 10 preferably satisfies a relationship of 0.7 ≤ L/r1 ≤ 0.8 on the plane intersecting axis C of rotating shaft 13 as illustrated in Fig. 3, where L is a distance between an outer end of magnet 12 and axis C of rotating shaft 13. This structure enables the cogging torque to be further effectively reduced without further reducing the efficiency of electric motor 1.

As illustrated in Fig. 3, rotor 10 includes second arc A2 having the center (point O2) located on a line segment connecting inflection point Pi and axis C of rotating shaft 13. This structure enables first arc A1 and second arc A2 to be smoothly connected at inflection point Pi. Thus, the cogging torque can be further reduced.

As described above, electric motor 1 according to the present exemplary embodiment includes rotor 10 and stator 20 that is disposed to face rotor 10 and that generates a magnetic force acting on rotor 10.

This structure enables the cogging torque to be effectively reduced without reducing efficiency of an electric motor.

### (Modifications)

Although rotor 10 and electric motor 1 according to the present disclosure has been described above based on the exemplary embodiments, the present disclosure is not limited to the exemplary embodiments.

For example, although the number of magnetic poles of rotor 10 is four (i.e., the number of magnets 12 is four) in the exemplary embodiments described above, the present disclosure is not limited thereto. For example, any number is applicable as the number of magnetic poles of rotor 10 as long as it is 2n (n is a natural number). Similarly, although the number of slots of stator 20 is six in the above exemplary embodiments, the present disclosure is not limited thereto.

Although magnet 12 is a sintered magnet in the above exemplary embodiments, the present disclosure is not limited thereto. For example, magnet 12 may be a bonded magnet.

Although electric motor 1 is described in the above exemplary embodiments when being applied to a fan motor of a vacuum cleaner, the present disclosure is not limited thereto. For example, electric motor 1 in the above exemplary embodiments can be used for a variety of electric apparatuses such as household electric apparatuses other than a vacuum cleaner, such as an air conditioner and a refrigerator, or industrial electric apparatuses such as an automobile apparatus and a robot.

### INDUSTRIAL APPLICABILITY

The technique of the present disclosure can be widely used for an electric motor including a rotor, an electric apparatus including the electric motor, and the like.

### REFERENCE MARKS IN THE DRAWINGS

- 1: electric motor
- 10: rotor
- 11: iron core
- 11a: through-hole
- 11b: magnet insertion hole
- 12: magnet
- 13: rotating shaft
- 20: stator
- 21: iron core
- 21a: teeth
- 22: winding coil
- 23: insulator
- 31: first bearing
- 32: second bearing
- 41: first bracket
- 42: second bracket
- A1: first arc
- A2: second arc
- L1: first straight line
- L2: second straight line
- P1: first point
- P2: second point
- Pi: inflection point

## Claims

1. A rotor comprising:
an iron core having a plurality of magnet insertion holes;
a plurality of magnets that are respectively disposed in the plurality of magnet insertion holes; and
a rotating shaft fixed to the iron core, the rotating shaft having an axis intersecting a plane on which the iron core has an outermost peripheral shape of corresponding to a magnetic pole of each of the plurality of magnets, the outermost peripheral shape including a first arc and a second arc that are continuous via an inflection point, the first arc passing through a first point at which a first straight line passing through a center of the magnetic pole and the axis intersects an outermost periphery of the iron core, the second arc connecting a second point at which a second straight line passing through a center between magnetic poles of two respective adjacent magnets of the plurality of magnets and the axis, the second straight line intersecting the outermost periphery of the iron core, to the inflection point, wherein
a relationship of 0.860 ≤ r2/r1 ≤ 0.925 is satisfied where a distance between the first point and the shaft center is indicated as r1 and a distance between the second point and the shaft center is indicated as r2, and
a relationship of 0.56 ≤ R2/R1 ≤ 0.71 is satisfied where a radius of the first arc is indicated as R1 and a radius of the second arc is indicated as R2.

2. The rotor according to Claim 1, wherein
the second point is one of two adjacent second points,
the two adjacent second points are connected with a chord at a length indicated as D1 and the magnet has a width indicated as D2 on the plane, and
a relationship of 0.7 ≤ D2/D1 ≤ 0.8 is satisfied.

3. The rotor according to Claim 1 or 2, wherein
the magnet has an outer end at a distance from the axis on the plane, the distance being indicated as L, and
a relationship of 0.7 ≤ L/r1 ≤ 0.8 is satisfied.

4. The rotor according to any one of Claims 1 to 3, wherein the second arc has a center located on a line segment connecting the inflection point and the axis.

5. The rotor according to any one of Claims 1 to 4, wherein the magnet has an end in a width direction that is located at a distance from the first straight line, the distance being longer than a distance between the inflection point and the first straight line.

6. An electric motor comprising:
the rotor according to any one of Claims 1 to 5; and
a stator that is disposed to face the rotor and generates a magnetic force acting on the rotor.
